# EUROPEAN PATENT SPECIFICATION

(11) **EP 4 156 377 B1**
(45) Date of publication and mention of the grant of the patent: **03.07.2024**
(21) Application number: 21821476.5
(22) Date of filing: 27.04.2021
(51) Int. Cl.: H01M 10/54, C10B 53/00

(54) **ANAEROBIC CRACKING METHOD FOR POWER BATTERY**
ANAEROBES CRACKING-VERFAHREN FÜR EINE STROMBATTERIE
PROCÉDÉ DE CRAQUAGE ANAÉROBIE POUR BATTERIE D'ALIMENTATION

(30) Priority: 09.06.2020 CN 202010518461
(43) Date of publication of application: 29.03.2023
(73) Proprietor: Guangdong Brunp Recycling Technology Co., Ltd, Foshan, Guangdong 528137 (CN); Hunan Brunp Recycling Technology Co., Ltd., Changsha, Hunan 410600 (CN); Hunan Brunp EV Recycling Co., Ltd., Changsha, Hunan 410600 (CN)
(72) Inventor: YU, Haijun, Foshan, Guangdong 528137 (CN); PENG, Ting, Foshan, Guangdong 528137 (CN); XIE, Yinghao, Foshan, Guangdong 528137 (CN); ZHANG, Xuemei, Foshan, Guangdong 528137 (CN)
(74) Representative: LifeTech IP Spies & Behrndt Patentanwälte PartG mbB
(86) International application number: PCT/CN2021/090327
(87) International publication number: WO 2021/249051

(56) References cited:
- CN-A- 106 966 539
- CN-A- 109 148 995
- CN-A- 109 273 791
- CN-A- 110 180 573
- CN-A- 110 444 830
- CN-A- 110 783 658
- CN-A- 111 682 276
- US-A1- 2013 312 254

## Description

### TECHNICAL FIELD

The present invention relates to the technical field of lithium ion batteries, and more particularly, to an anaerobic cracking method for a power battery.

### BACKGROUND

Nowadays, with the huge growth of decommissioned power batteries, large-scale full-component recycling of the decommissioned power batteries is extremely urgent. However, the harmless treatment of three typical organic matters in the decommissioned power batteries has always affected the efficiency of full-component metal recycling. Currently, the cleaner production and secondary environmental protection in the recycling industry are seriously affected all over the world, especially the traditional incineration and pyrolysis methods are difficult to meet the environmental standards of cleaner production and ultra-low emission, which is a common key problem in the battery recycling industry.

In recent years, China's new energy vehicles have developed rapidly. The annual output of the new energy vehicles will exceed two million by 2020, and the cumulative production and sales volume will exceed five million. With the increase of daily use times and service life periods of the vehicles, various properties of the power batteries of the new energy vehicles are declining day by day. According to the internationally general battery specifications, in order to ensure the daily driving safety of the vehicles, when the properties of a power battery pack decay to 80% of that of the original power battery, the power battery pack has to be decommissioned and replaced. However, the decommissioned batteries should be recycled to realize their values better.

There are many organic matters in the decommissioned power batteries. With the increase of the number of the decommissioned power batteries, the organic matters in the decommissioned power batteries are not properly disposed and utilized to the maximum value, resulting in irreversible environmental pollution. As for the traditional incineration and pyrolysis, waste heat of incineration may be utilized in traditional incineration technologies to generate electricity, but improper treatment of tail gas after incineration will cause great pollution to air and soil. Both the tail gas and soot after incineration contain toxic substances, which need special treatment before being discharged, resulting in high treatment cost and high investment cost. Ordinary pyrolysis does not carry out gradient control on temperature, and valuable substances produced in the pyrolysis process of organic matters cannot be classified and recovered. Meanwhile, because temperature control cannot be carried out according to the temperature properties of the organic matters, pyrolysis time is increased and energy consumption is increased, which is not conducive to cost saving.

The traditional cracking of organic polymer materials is to preheat waste plastics to a molten state, and remove HCl generated during the preheating process with lime, such as "Waste Plastics Cracking Refining Process and Equipment" (CN201610156147.9). However, this traditional recycling method cannot effectively recycle a plastic separator in the lithium ion battery, and the other parts of the battery are not fully recycled, resulting in waste of resources, and this technology is relatively backward. The document CN 110 783 658 A discloses another process according to prior art for a anaerobically cracking power battery.

### SUMMARY

The object of the present invention is to provide an anaerobic cracking method for a power battery. According to the method, a waste separator in the lithium battery is degraded by anaerobic catalytic cracking, which realizes efficient degradation, and the products are C1-C4 and C5-C10 small molecule organic matters with industrial utilization values.

To implement the foregoing object, the present invention employs the following technical solutions.

An anaerobic cracking method for a power battery includes the following steps of:
(1) disassembling a waste power battery to obtain a battery cell and a metal housing respectively;
(2) taking out a separator in the battery cell and washing for later use, and pyrolyzing the remaining battery cell to obtain electrode powder;
(3) extracting nickel, cobalt and manganese elements in the electrode powder by using an extracting solution, filtering, taking out the filtrate, adjusting the filtrate by using a nickel solution, a cobalt solution and a manganese solution to obtain a solution A, dropwise adding the solution A into ammonia water for stirring, adding alkali liquor, and stirring to obtain a solution B;
(4) enabling the solution B to be subjected to a hydrothermal reaction, filtering, baking and roasting the solution B to obtain a catalyst Ni²⁺_{1-x-y}Co²⁺ₓMn²⁺_{y}O;
(5) infiltrating the separator in step (2) with a solvent, carrying out vacuum treatment on the separator, and then crushing and grinding the separator to obtain powder; and
(6) mixing the powder with the catalyst in step (4) for reaction to obtain C1-C4 and C5-C10 small molecule organic matters; the catalyst in step (4) having a chemical formula of Ni²⁺_{1-x-y}Co²⁺ₓMn²⁺_{y}O, wherein 0.25≤x<0.45, and 0.25≤y<0.45.

Preferably, the pyrolyzing in step (2) is carried out at a temperature of 400°C to 600°Cin a vacuum environment, and lasts for 2 hours to 8 hours.

The extracting solution in step (3) is one of a mixed solution of nitric acid and oxidant or hydrochloric acid.

More preferably, the oxidant is at least one of hydrogen peroxide, potassium peroxide, sodium hypochlorite or potassium hypochlorite.

More preferably, a mass ratio of the mixed solution to the hydrochloric acid and the water in the extracting solution is (1 to 3): (1 to 3): 1.

Preferably, a mass ratio of the electrode powder to the extracting solution in step (3) is 1: 1 to 3.

Preferably, contents of the nickel, the cobalt and the manganese are measured before the filtrate adjusting process in step (3).

More preferably, one of a dimethylglyoxime gravimetric method, a potentiometric titration method or an EDTA titration method is used as a titration method for determining the contents of the nickel, the cobalt and the manganese.

Preferably, the nickel solution, the cobalt solution and the manganese solution in step (3) are at least one of nitrates, hydrochlorides or sulfates of nickel, cobalt and manganese.

Preferably, a molar ratio of the nickel to the cobalt and the manganese in the solution A in step (3) is 1: (0.5 to 3): (0.5 to 3).

Preferably, a total concentration of the three elements including nickel, cobalt and manganese in the solution A in step (3) ranges from 2 mol/L to 6 mol/L.

Preferably, a volume ratio of the solution A to the ammonia water in step (3) is 1: (3 to 7).

Preferably, a concentration of the ammonia water is ranges from 0.2 mol/L to 0.8 mol/L.

Preferably, the alkali liquor in step (3) is NaOH; and a concentration of the NaOH ranges from 2 mol/L to 6 mol/L.

Preferably, the hydrothermal reaction in step (4) is carried out at a temperature of 100°C to 150°C, and lasts for 2 hours to 6 hours.

Preferably, the drying in step (4) is carried out at a temperature of 60°C to 80°C, and lasts for 4 hours to 24 hours.

Preferably, the roasting in step (4) is carried out at a temperature of 450°C to 500°Cin a nitrogen atmosphere, and lasts for 1 hour to 2 hours.

Preferably, a mass ratio of the separator to the solvent in step (5) is 1: (0.4 to 0.8).

Preferably, the solvent in step (5) is amyl acetate.

Preferably, the infiltrating in step (5) is carried out at a temperature of 70°C to 80°C, and lasts for 12 hours to 24 hours.

Preferably, the vacuum treatment in step (5) is carried out at a temperature of 80°C to 120°C, and lasts for 30 minutes to 120 minutes.

Preferably, a mass ratio of the powder to the catalyst in step (6) is 1: (200 to 240).

Preferably, the reaction in step (6) is carried out at a temperature of 400°C to 700°C, and lasts for 4 hours to 8 hours.

The C1-C4 and C5-C10 small molecule organic matters in step (6) are saturated or unsaturated hydrocarbons with a carbon chain of 1 carbon to 10 carbons.

More preferably, the C1-C4 and C5-C10 small molecule organic matters are gaseous hydrocarbons such as methane, ethane, ethylene, propylene and butene or liquid hydrocarbons such as pentane, pentene, ethane and hexene.

Preferably, after the reaction in step (3), the catalyst after the reaction is pyrolyzed, extracted with an extracting solution, and recycled.

More preferably, the extracting solution is one of a mixed solution of nitric acid and oxidant or hydrochloric acid.

More preferably, the oxidant is at least one of hydrogen peroxide, potassium peroxide, sodium hypochlorite or potassium hypochlorite.

More preferably, a mass ratio of the mixed solution to the hydrochloric acid and the water in the extracting solution is (1 to 3): (1 to 3): 1.

### Beneficial effects

1. According to the method, the waste separator in the lithium battery is degraded by anaerobic catalytic cracking, which realizes efficient degradation, and the products were small molecule organic matters and have industrial utilization values. In addition, the environmental pollution caused by the separator of the waste lithium battery were effectively avoided, and only nitrogen was consumed in the catalytic degradation process, which does not cause environmental pollution. A simply recovered separator may be a mixture of various high-molecular polymers, which may be damaged and has low recovery value. However, the separator of the present invention after degradation may be used as combustible gas to serve as an energy source on one hand, and may serve as an industrial raw material on the other hand.
2. Amyl acetate is used as the solvent in the method of the present invention, which destroys the mechanical strength of a linear polymer and increases the brittleness of the polymer by swelling, so that the polymer can be easily crushed and ground into a powder state with smaller granularity. This makes the reactants better contact with the catalyst, so that the catalytic effect is better. Moreover, the binding force between molecules can be destroyed by swelling, so that the molecules are easier to be activated by catalyst adsorption.
3. In the present invention, the catalyst is prepared by using the cathode materials of the waste battery as the raw material, and then the catalyst is used to catalyze the degradation of the separator, and the catalyst can still be recycled for catalysis again.

### BRIEF DESCRIPTION OF DRAWINGS

FIG. 1 is an SEM graph of a catalyst prepared in Embodiment 2;
FIG. 2 is a comparative graph of yields of small molecule organic matters prepared in Embodiment 2 and Comparative Example 1; and
FIG. 3 is a gas chromatographic detection graph of the small molecule organic matters prepared in Embodiment 2.

### DETAILED DESCRIPTION

In order to make the technical solutions of the present invention clearer to those skilled in the art, the following embodiments are listed for explanation. It should be noted that the following embodiments do not limit the scope of protection claimed by the present invention.

Unless otherwise specified, the raw materials, reagents or devices used in the following embodiments can be obtained from conventional commercial sources or by existing known methods.

### Embodiment 1

An anaerobic cracking method for a power battery according to this embodiment included the following steps of:
(1) discharging and disassembling a waste power battery in turn to obtain a battery cell and a metal housing respectively;
(2) taking out a separator in the battery cell and washing with deionized water until no attachments are visible to naked eyes, and pyrolyzing the remaining electric cell for 4 hours at 500°C under a vacuum atmosphere to obtain electrode powder;
(3) extracting nickel, cobalt and manganese elements in the electrode powder by using an extracting solution, (a molar ratio of water to hydrochloric acid and hydrogen peroxide was 1: 1: 1) according to a solid-liquid ratio of 1: 3, directly recovering a current collector, filtering and removing filter residues, and respectively measuring contents of the nickel, the cobalt and the manganese in the filtrate by a dimethylglyoxime gravimetric method, a potentiometric titration method and an EDTA titration method, adjusting a molar ratio of the nickel to the cobalt and the manganese in 10 mL of filtrate to 1: 0.5: 0.5 with a nickel solution, a cobalt solution and a manganese solution (all with a concentration of 4 mol/L) respectively to obtain a solution A (a total concentration of the nickel, the cobalt and the manganese was 2 mol/L), and dropping the solution A into ammonia water with a concentration of 0.2 mol/L at a volume ratio of 1: 3 and stirring for 5 minutes simultaneously with a speed of revolution of 50 r/min, then adding 0.1 mL of NaOH solution with a concentration of 2 mol/L, and maintaining the original speed and stirring for 5 minutes to obtain a solution B;
(4) placing the solution B in a polytetrafluoroethylene reaction kettle for hydrothermal reaction at 100°C for 2 hours, filtering precipitates, washing filter residues with deionized water for 3 times, drying for 4 hours at 60°C, and roasting for 1 hour at 450 °C under a nitrogen atmosphere to obtain a catalyst Ni²⁺_{0.5}Co²⁺_{0.25}Mn²⁺_{0.25}O;
(5) infiltrating the separator in step (2) with amyl acetate (a solid-liquid ratio of 1: 0.4, soaking at 70°C for 12 hours), after infiltrating, carrying out vacuum treatment on the separator at 80°C for 30 minutes, and then crushing and grinding the separator into powder; and
(6) mixing the powder with the catalyst Ni²⁺_{0.5}Co²⁺_{0.25}Mn²⁺_{0.25}O obtained in step (4) in a mass ratio of 200: 1, placing the mixture in a high-pressure reactor, vacuumizing the reactor, introducing nitrogen, reacting for 4 hours at 400°C under a nitrogen atmosphere to obtain small molecule organic matters, and then pyrolyzing the reacted catalyst, extracting the catalyst with an extracting solution, and recycling.

### Embodiment 2

An anaerobic cracking method for a power battery according to this embodiment included the following steps of:
(1) discharging and disassembling a waste power battery in turn to obtain a battery cell and a metal housing respectively, wherein the metal housing was directly recycled;
(2) taking out a separator in the battery cell and washing with deionized water until no attachments are visible to naked eyes, and pyrolyzing the remaining electric cell for 4 hours at 500°C under a vacuum atmosphere to obtain electrode powder;
(3) extracting nickel, cobalt and manganese elements in the electrode powder by using an extracting solution, (a molar ratio of water to hydrochloric acid and hydrogen peroxide was 1: 2: 2) according to a solid-liquid ratio of 1: 3, directly recovering a current collector, filtering and removing filter residues, and respectively measuring contents of the nickel, the cobalt and the manganese in the filtrate by a dimethylglyoxime gravimetric method, a potentiometric titration method and an EDTA titration method, adjusting a molar ratio of the nickel to the cobalt and the manganese in 250 mL of filtrate to 1: 2: 2 with a nickel solution, a cobalt solution and a manganese solution (all with a concentration of 6 mol/L) respectively to obtain a solution A (a total concentration of the nickel, the cobalt and the manganese was 4 mol/L), and dropping the solution A into ammonia water with a concentration of 0.5 mL/L at a volume ratio of 1: 5 and stirring for 30 minutes with a speed of revolution of 500 r/min, then adding 20 mL of NaOH solution with a concentration of 4 mol/L, and stirring for 5 minutes with a speed of revolution of 500 r/min to obtain a solution B;
(4) placing the solution B in a polytetrafluoroethylene reaction kettle for hydrothermal reaction at 120°C for 4 hours, filtering precipitates, washing filter residues with deionized water for 5 times, drying for 14 hours at 70°C, and roasting for 1.5 hours at 480 °C under a nitrogen atmosphere to obtain a catalyst Ni²⁺_{0.2}Co²⁺_{0.4}Mn²⁺_{0.4}O;
(5) infiltrating the separator with amyl acetate for 12 hours at 70°C with a solid-liquid ratio of 1: 0.6, carrying out vacuum treatment on the separator at 100°C for 80 minutes, and then crushing and grinding the separator into powder; and
(6) mixing the powder with the catalyst Ni²⁺_{0.2}Co²⁺_{0.4}Mn²⁺_{0.4}O obtained in step (4) in a mass ratio of 200: 1, placing the mixture in a high-pressure reactor, vacuumizing the reactor, introducing nitrogen, reacting for 6 hours at 550°C under a nitrogen atmosphere to obtain small molecule organic matters, and then pyrolyzing the reacted catalyst, extracting the catalyst with an extracting solution, and recycling.

### Embodiment 3

An anaerobic cracking method for a power battery according to this embodiment included the following steps of:
(1) discharging and disassembling a waste power battery in turn to obtain a battery cell and a metal housing respectively, wherein the metal housing was directly recycled;
(2) taking out a separator in the battery cell and washing with deionized water until no attachments are visible to naked eyes, and pyrolyzing the remaining electric cell for 4 hours at 500°C under a vacuum atmosphere to obtain electrode powder;
(3) extracting nickel, cobalt and manganese elements in the electrode powder by using an extracting solution, (a molar ratio of water to hydrochloric acid and hydrogen peroxide was 1: 3: 3) according to a solid-liquid ratio of 1: 3, directly recovering a current collector, filtering and removing filter residues, and respectively measuring contents of the nickel, the cobalt and the manganese in the filtrate by a dimethylglyoxime gravimetric method, a potentiometric titration method and an EDTA titration method, adjusting a molar ratio of the nickel to the cobalt and the manganese in 500 mL of filtrate to 1: 3: 3 with a nickel solution, a cobalt solution and a manganese solution (all with a concentration of 6 mol/L) respectively to obtain a solution A (a total concentration of the nickel, the cobalt and the manganese was 6 mol/L), and dropping the solution A into ammonia water with a concentration of 0.8 mol/L at a volume ratio of 1: 7 and stirring for 60 minutes with a speed of revolution of 1,000 r/min, then adding 45 mL of NaOH solution with a concentration of 6 mol/L, and stirring for 30 minutes with a speed of revolution of 1,000 r/min to obtain a solution B;
(4) placing the solution B in a polytetrafluoroethylene reaction kettle for hydrothermal reaction at 150°C for 6 hours, filtering precipitates, washing filter residues with deionized water for 7 times, drying for 24 hours at 80°C, and roasting for 2 hours at 500 °C under a nitrogen atmosphere to obtain a catalyst Ni²⁺_{0.142}Co²⁺_{0.419}Mn²⁺_{0.429}O;
(5) infiltrating the separator with amyl acetate for 24 hours at 80°C with a solid-liquid ratio of 1: 0.8, carrying out vacuum treatment on the separator at 120°C for 120 minutes, and then crushing and grinding the separator into powder; and
(6) mixing the powder with the catalyst Ni²⁺_{0.142}Co²⁺_{0.429}Mn²⁺_{0.429}O obtained in step (4) in a mass ratio of 200: 1, placing the mixture in a high-pressure reactor, vacuumizing the reactor, introducing nitrogen, reacting for 8 hours at 700°C under a nitrogen atmosphere to obtain small molecule organic matters, and then pyrolyzing the reacted catalyst, extracting the catalyst with an extracting solution, and recycling.

### Comparative Example 1 (CN108941162A)

An anaerobic cracking recovery and sorting process for a lithium battery included the following steps of:
step 1: feeding a lithium battery into a crusher for crushing;
step 2: crushing, by the crusher, the lithium battery, and conveying, by a conveying plant, the lithium battery to a winnowing machine;
step 3: separating, by the winnowing machine, metal blocks and plastic housings with larger specific gravity, and delivering mixed materials of cathode and anode plates, separators and plastics with smaller specific gravity to a high-temperature anaerobic cracking furnace through the conveying plant after vacuumizing, wherein a temperature of the high-temperature anaerobic cracking furnace was over 300°C, the high-temperature anaerobic cracking furnace was vacuumized and kept closed before added with the mixed materials, the conveying plant kept a vacuum state during the conveying process, and the plastics and the separators doped in the mixed materials were cracked to generate combustible gas, which was discharged and collected, and only the cathode and anode plates and a small amount of metal were left in the mixed material after cracking;
step 4: feeding the cathode and anode plates into a high-speed decomposer, crushing, by the high-speed decomposer, the cathode and anode plates into powder again for decomposition and separation, and decomposing, by the decomposer, the materials into metal granules with larger granularity and cathode and anode powder with smaller granularity;
step 5: feeding the decomposed and separated materials into a cyclone collector through negative pressure, aggregating, by the cyclone collector, the collected cathode and anode powder through a dust collection system equipped with a fan, and collecting, by the dust collection system, the cathode and anode powder;
step 6: screening, by a screening plant, the materials with coarser granules left after being collected by the cyclone collector, and screening out the cathode and anode powder with increasing granularity, copper-aluminum mixture and large metal granules respectively;
step 7: separating copper and aluminum with different specific gravities after screening, grading and multiple specific gravity sorting of the screened metal mixture; and
step 8: classifying the obtained cathode and anode powder, metal and plastic.

### Comparison of degradation effects:

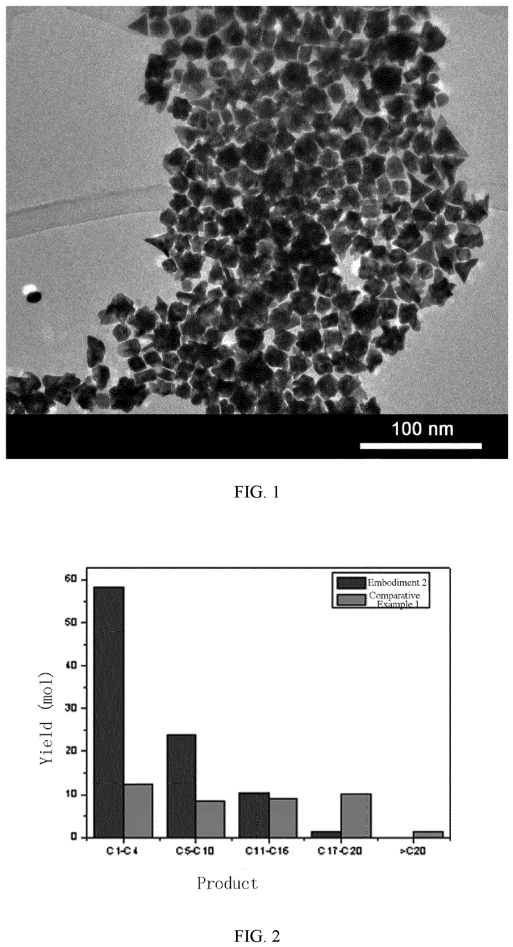

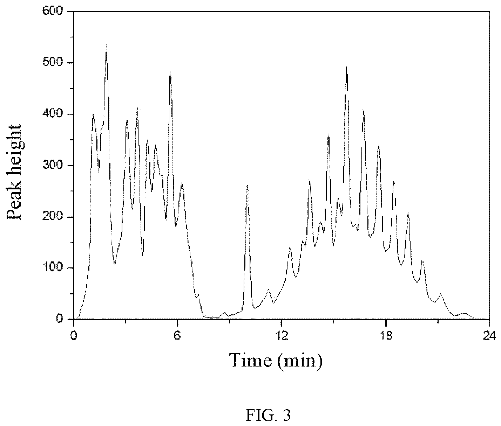

The products obtained by carrying out anaerobic cracking according to Embodiment 2 and Comparative Example 1 were detected by gas chromatography respectively. The yield results are shown in FIG. 2. It can be seen from FIG. 2 that the yield of C1-C10 micromolecule products in Comparative Example 1 is lower, while the yield of macromolecule products above C11 is higher. On the contrary, in Example 2, the yield of C1-C4 and C5-C10 micromolecule products is higher, while the yield of macromolecular products is lower. The gas chromatography detection results are shown in FIG. 3. Thus it is indicated that the anaerobic cracking effect of Embodiment 2 is better than that of Comparative Example 1, and the products are small molecule organic matters and have industrial utilization values. The simply recovered separator in Comparative Example 1 is a mixture of various high-molecular polymers, which may be damaged and has low recovery value. However, the separator of the present invention after degradation may be used as combustible gas to serve as an energy source on one hand, and may serve as an industrial raw material on the other hand.

The anaerobic cracking method of the power battery provided by the present invention has been introduced in detail above, and the principle and implementation of the present invention have been illustrated with specific embodiments. The explanation of the above embodiments is only used to help understand the method and the core idea of the present invention, including the best mode, and also enables any person skilled in the art to practice the present invention, including manufacturing and using any device or system, and implementing any combined method. It should be pointed out that for those of ordinary skills in the art, several improvements and modifications can be made to the present invention without departing from the principle of the present invention, and these improvements and modifications also fall within the protection scope of the claims of the present invention. The protection scope of the present invention is defined by the claims, and may include other embodiments that can be thought of by those skilled in the art. If these other embodiments have structural elements that are not different from the literal expression of the claims, or if they include equivalent structural elements that are not materially different from the literal expression of the claims, these other embodiments should also be included in the scope of the claims.

## Claims

1. An anaerobic cracking method for a power battery, comprising:
(1) disassembling a waste power battery to obtain a battery cell and a metal housing respectively;
(2) taking out a separator in the battery cell and washing for later use, and pyrolyzing the battery cell to obtain electrode powder;
(3) extracting nickel, cobalt and manganese elements in the electrode powder by using an extracting solution, filtering, taking out the filtrate, adjusting the filtrate by using a nickel solution, a cobalt solution and a manganese solution to obtain a solution A, dropwise adding the solution A into ammonia water for stirring, adding alkali liquor, and stirring to obtain a solution B;
(4) enabling the solution B to be subjected to a hydrothermal reaction, filtering, baking and roasting the solution B to obtain a catalyst;
(5) infiltrating the separator in step (2) with a solvent, carrying out a vacuum treatment on the separator, and then crushing and grinding the separator to obtain powder; and
(6) mixing the powder with the catalyst in step (4) for reaction to obtain C1-C4 and C5-C10 small molecule organic matters;
the catalyst in step (4) having a chemical formula of Ni²⁺_{1-x-y}Co²⁺ₓMn²⁺_{y}O, where 0.25≤x<0.45, and 0.25≤y<0.45; the extracting solution in step (3) is one of a mixed solution of nitric acid and oxidant or hydrochloric acid; the C1-C4 and C5-C10 small molecule organic matters in step (6) are saturated or unsaturated hydrocarbons with a carbon chain of 1 carbon to 10 carbons.

2. The anaerobic cracking method of claim 1, wherein the pyrolyzing in step (2) is carried out at a temperature of 400°C to 600°C in a vacuum environment, and lasts for 2 hours to 8 hours.

3. The anaerobic cracking method of claim 1, wherein the oxidant is at least one of hydrogen peroxide, potassium peroxide, sodium hypochlorite or potassium hypochlorite.

4. The anaerobic cracking method of claim 1, wherein the nickel solution, the cobalt solution and the manganese solution in step (3) are at least one of nitrates, hydrochlorides or sulfates of nickel, cobalt and manganese.

5. The anaerobic cracking method of claim 1, wherein a molar ratio of the nickel to the cobalt and the manganese in the solution A in step (3) is 1: (0.5 to 3): (0.5 to 3).

6. The anaerobic cracking method of claim 1, wherein the hydrothermal reaction in step (4) is carried out at a temperature of 100°C to 150°C, and lasts for 2 hours to 6 hours.

7. The anaerobic cracking method of claim 1, wherein the roasting in step (4) is carried out at a temperature of 450°C to 500°Cin a nitrogen atmosphere, and lasts for 1 hour to 2 hours.

8. The anaerobic cracking method of claim 1, wherein the solvent in step (5) is amyl acetate.

9. The anaerobic cracking method of claim 1, wherein the vacuum treatment in step (5) is carried out at a temperature of 80°C to 120°C, and lasts for 30 minutes to 120 minutes.

10. The anaerobic cracking method of claim 1, wherein the reaction in step (6) is carried out at a temperature of 400°C to 700°C, and lasts for 4 hours to 8 hours.

## Patentansprüche

1. Ein anaerobes Cracking-Verfahren für eine Strombatterie, umfassend:
(1) Zerlegen einer Altbatterie, um eine Batteriezelle bzw. ein Metallgehäuse zu erhalten;
(2) Herausnehmen eines Separators aus der Batteriezelle, und Waschen zur späteren Verwendung, sowie Pyrolysieren der Batteriezelle, um Elektrodenpulver zu erhalten;
(3) Extrahieren von Nickel-, Kobalt- und Manganelementen in dem Elektrodenpulver mittels einer Extraktionslösung, Filtern, Entnehmen des Filtrats, Anpassen des Filtrats mittels einer Nickellösung, einer Kobaltlösung und einer Manganlösung, um eine Lösung A zu erhalten, tropfenweises Hinzufügen der Lösung A zu Ammoniakwasser zum Rühren, Hinzufügen von Alkalilauge und Rühren, um eine Lösung B zu erhalten;
(4) Ermöglichen, dass die Lösung B einer hydrothermalen Reaktion unterzogen wird, Filtern, Trocknen und Erhitzen der Lösung B, um einen Katalysator zu erhalten;
(5) Infiltrieren des Separators aus Schritt (2) mit einem Lösungsmittel, Durchführen einer Vakuumbehandlung an dem Separator und anschließend Zerkleinern und Mahlen des Separators, um Pulver zu erhalten; und
(6) Mischen des Pulvers mit dem Katalysator aus Schritt (4) für eine Reaktion, um niedermolekulare organische CI-C4- und C5-C10-Stoffe zu erhalten;
dabei weist der Katalysator aus Schritt (4) die chemische Formel Ni²_{1-x-y}Co²⁺ₓMn²⁺_{y}O auf, wobei 0,25≤x<0,45 und 0,25≤y<0,45;
die Extraktionslösung in Schritt (3) ist eine gemischte Lösung aus Salpetersäure und Oxidationsmittel oder Salzsäure; die niedermolekularen organischen CI-C4- und C5-C10-Stoffe in Schritt (6) sind gesättigte oder ungesättigte Kohlenwasserstoffe mit einer Kohlenstoffkette von 1 Kohlenstoffatom bis 10 Kohlenstoffatomen.

2. Das anaerobe Cracking-Verfahren nach Anspruch 1, wobei das Pyrolisieren in Schritt (2) bei einer Temperatur von 400°C bis 600°C in einer Vakuumumgebung durchgeführt wird und 2 Stunden bis 8 Stunden dauert.

3. Das anaerobe Cracking-Verfahren nach Anspruch 1, wobei das Oxidationsmittel mindestens eines der folgenden ist: Wasserstoffperoxid, Kaliumperoxid, Natriumhypochlorit oder Kaliumhypochlorit.

4. Das anaerobe Cracking-Verfahren nach Anspruch 1, wobei die Nickellösung, die Kobaltlösung und die Manganlösung in Schritt (3) mindestens eines der folgenden sind: Nitrate, Hydrochloride oder Sulfate von Nickel, Kobalt und Mangan.

5. Das anaerobe Cracking-Verfahren nach Anspruch 1, wobei das Molverhältnis von Nickel zu Kobalt und Mangan in der Lösung A in Schritt (3) 1: (0,5 bis 3): (0,5 bis 3) beträgt.

6. Das anaerobe Cracking-Verfahren nach Anspruch 1, wobei die hydrothermale Reaktion in Schritt (4) bei einer Temperatur von 100°C bis 150°C durchgeführt wird und 2 Stunden bis 6 Stunden dauert.

7. Das anaerobe Cracking-Verfahren nach Anspruch 1, wobei das Erhitzen in Schritt (4) bei einer Temperatur von 450°C bis 500°C in einer Stickstoffatmosphäre durchgeführt wird und 1 Stunde bis 2 Stunden dauert.

8. Das anaerobe Cracking-Verfahren nach Anspruch 1, wobei das Lösungsmittel in Schritt (5) Amylacetat ist.

9. Das anaerobe Cracking-Verfahren nach Anspruch 1, wobei die Vakuumbehandlung in Schritt (5) bei einer Temperatur von 80°C bis 120°C durchgeführt wird und 30 Minuten bis 120 Minuten dauert.

10. Das anaerobe Cracking-Verfahren nach Anspruch 1, wobei die Reaktion in Schritt (6) bei einer Temperatur von 400°C bis 700°C durchgeführt wird und 4 Stunden bis 8 Stunden dauert.

## Revendications

1. Procédé de craquage anaérobie pour une batterie d'alimentation, comprenant :
(1) démonter une batterie batterie d'alimentation usagée pour obtenir respectivement un élément de batterie et un boîtier métallique ;
(2) retirer un séparateur dans l'élément de batterie, et laver pour une utilisation ultérieure, et pyrolyser l'élément de batterie pour obtenir de la poudre d'électrode ;
(3) extraire les éléments de nickel, de cobalt et de manganèse dans la poudre d'électrode à l'aide d'une solution d'extraction, filtrer, retirer le filtrat, ajuster le filtrat à l'aide d'une solution de nickel, d'une solution de cobalt et d'une solution de manganèse pour obtenir une solution A, ajouter goutte à goutte la solution A dans de l'eau ammoniacale pour agiter, ajouter de la liqueur alcaline et agiter pour obtenir une solution B ;
(4) permettre à la solution B d'être soumise à une réaction hydrothermale, filtrer, cuire et rôtir la solution B pour obtenir un catalyseur ;
(5) infiltrer le séparateur à l'étape (2) avec un solvant, effectuer un traitement sous vide sur le séparateur, puis écraser et broyer le séparateur pour obtenir de la poudre ; et
(6) mélanger la poudre avec le catalyseur dans l'étape (4) pour une réaction afin d'obtenir des matières organiques à petites molécules C1-C4 et C5-C10 ;
le catalyseur de l'étape (4) ayant une formule chimique Ni²_{1-x-y}Co²⁺ₓMn²⁺_{y}O, où 0,25≤x<0,45 et 0,25≤y<0,45 ;
la solution d'extraction à l'étape (3) est une solution mixte d'acide nitrique et d'oxydant ou d'acide chlorhydrique ; les matières organiques à petites molécules CI-C4 et C5-C10 de l'étape (6) sont des hydrocarbures saturés ou insaturés dont la chaîne carbonée comporte de 1 à 10 carbones.

2. Procédé de craquage anaérobie selon la revendication 1, dans lequel le pyrolyser dans l'étape (2) est réalisé à une température de 400°C à 600°C dans un environnement sous vide, et dure de 2 heures à 8 heures.

3. Procédé de craquage anaérobie selon la revendication 1, dans lequel la solution d'extraction dans l'étape (3) est l'une d'une solution mixte d'acide nitrique et d'oxydant ou d'acide chlorhydrique ; et l'oxydant est au moins un peroxyde d'hydrogène, un peroxyde de potassium, un hypochlorite de sodium ou un hypochlorite de potassium.

4. Procédé de craquage anaérobie selon la revendication 1, dans lequel la solution de nickel, la solution de cobalt et la solution de manganèse dans l'étape (3) sont au moins l'un des nitrates, chlorhydrates ou sulfates de nickel, de cobalt et de manganèse.

5. Procédé de craquage anaérobie selon la revendication 1, dans lequel le rapport molaire du nickel au cobalt et au manganèse dans la solution A à l'étape (3) est de 1: (0,5 à 3): (0,5 à 3).

6. Procédé de craquage anaérobie selon la revendication 1, dans lequel la réaction hydrothermale de l'étape (4) est réalisée à une température de 100°C à 150°C et dure de 2 heures à 6 heures.

7. Procédé de craquage anaérobie selon la revendication 1, dans lequel le rôtir de l'étape (4) est effectué à une température de 450°C à 500°C dans une atmosphère d'azote et dure 1 heure à 2 heures.

8. Procédé de craquage anaérobie selon la revendication 1, dans lequel le solvant dans l'étape (5) est l'acétate d'amyle.

9. Procédé de craquage anaérobie selon la revendication 1, dans lequel le traitement sous vide de l'étape (5) est effectué à une température de 80°C à 120°C et dure de 30 minutes à 120 minutes.

10. Procédé de craquage anaérobie selon la revendication 1, dans lequel la réaction de l'étape (6) est réalisée à une température de 400°C à 700°C et dure de 4 heures à 8 heures.
